# EUROPEAN PATENT APPLICATION

(11) **EP 1 427 214 A2**
(43) Date of publication of application: **09.06.2004**
(21) Application number: 04000370.9
(22) Date of filing: 30.08.2000
(51) Int. Cl.: H04N 7/24, H04N 5/00

(54) **Method and system of identifying software and firmware objects available for download over a network such as a cable television system**

(30) Priority: 02.09.1999 US 152102; 04.05.2000 US 565302
(62) Divisional of application: 00959623.0
(71) Applicant: General Instrument Corporation, Horsham, Pennsylvania 19044 (US)
(72) Inventor: Safadi, Reem, Horseham PA 19044 (US); Vince, Lawrence, Landsdale PA 19446 (US); Makofka, Douglas S., Willow Grove PA 19090 (US); Poli, Christopher, Doylestown PA 18901 (US); Del Sordo, Christopher S., Souderton PA 18964 (US); Booth, Robert C., Jamison PA 18929 (US)
(74) Representative: Cooper, John

(57) **Abstract**

This method and system allow a subscriber to a cable television service to receive a listing or menu of programming available for that subscriber's set-top terminal to upgrade or enhance the features available over the cable system. A Directory of Services (DoS) message is transmitted to over the cable system to the subscriber's set-top terminal. The terminal can then display for the subscriber the menu of programming available. This display may include a price for downloading each programming object. The subscriber can then, using a remote control unit or a user input device on the terminal, direct the set-top terminal to acquire a listed programming object. The DoS message will provide information enabling the set-top terminal to download the indicated programming object from the cable system in response to the subscriber's input. The subscriber can then have intermediate access to upgraded or enhanced programming, the purchase of which is billed to the subscriber's account.

## Description

### FIELD OF THE INVENTION

The present invention relates to the field of programming a set-top terminal of a cable television system, particularly upgrading or expanding the software or firmware in the set-top terminal. More particularly, the present invention relates to the field of providing a directory of available code objects that can be downloaded by the set-top terminal at the instigation of the user of the set-top terminal.

### BACKGROUND OF THE INVENTION

In a typical cable television system, subscribers are provided with a set-top box or terminal. The set-top terminal is a box of electronic equipment that is used to connect the subscriber's television, and potentially other electronic equipment, with the cable network. The set-top box is usually connected to the cable network through a co-axial wall outlet.

The set-top box is essentially a computer that is programmed to process the signals from the cable network so as to provide the subscriber with the cable services. These services from the cable television company typically include access to a number of television channels. Additionally, premium channels may also be provided to subscribers at an additional fee. Pay-per-view events and video-on-demand service may also be provided over the cable network. The set-top box is programmed to provide these services to the subscriber.

However, the services of the cable company need not be limited to providing television programming. Some cable companies are now offering internet access and e-mail over the cable network at speeds much faster than available over conventional telephone lines. It is anticipated in the future that more and more services will be provided over the cable network, including even basic telephone service. Eventually, each home or office may have a single connection, via the cable network, to all electronic data services.

As the cable network and the services provided evolve, the set-top terminal must also evolve to be able to provide subscribers with all the services of the cable network. This set-top box evolution will primarily involve changes to the programming of the set-top box. By upgrading the software or firmware of the set-top box, the box can be made to perform more efficiently or offer new services as the cable network evolves.

In order to upgrade the population of set-top boxes on a cable network, it is preferable to transmit the new programming to the set-top boxes via the cable network itself. Otherwise, a technician must visit each subscriber to upgrade the set-top boxes. Such field upgrades would obviously be at significant expense.

The headend is the facility from which the cable network operator broadcasts television signals and provides other services over the cable network. Updated software that is provided to the population of set-top terminals can be broadcast from the headend over the cable network.

As the services available over the cable network increase, some users will wish to pay for the additional services. In contrast, other subscribers will avoid the increased cost of some services. Over time, new subscribers will enter the network and select the services they desire. Existing subscribers may also wish to expand their use of the services offered. Either situation will require that the appropriate programming for implementing the desired service or services be added to that subscriber's set-top terminal. In such a case, the subscriber would presumably have to contact the cable system operator or service provider to have his or her set-top terminal programmed to offer the new service or services.

This, however, entails some amount of effort on the part of the subscriber. Consequently, such additional services will not commonly be purchased on impulse, thereby decrease the sales of such services by the service provider. Moreover, the service provider will need to maintain and staff a facility for receiving and responding to those orders for additional services that are made.

Consequently, there is a need in the art for a method and system whereby subscribers can order, on impulse, and receive additional or upgraded programming for their set-top terminals without contacting the service provider. There is a further need in the art for a method and system that allows the system operator to support this upgrade service for subscribers at minimal cost, i.e., with automatic electronic delivery that does not require staff to take and fill subscriber requests for additional or upgraded programming.

EP-A-0,905,984 discloses a CATV system in which updated computer software can be downloaded to user terminals along with broadcast programs. This system is used for distributing software updates to appropriate ones of the terminals connected to the system in an automated manner. There is no selection or other input by the end user, and the operation does not cause a directory of available code objects to be displayed on a display device.

WO97/30549 likewise describes the downloading of software updates to terminals in a CATV system. This document describes a system for downloading different versions of software to individual terminals, dependent upon differences in individual terminals due to variations in hardware, operating system versions, and the like. Again, this downloading is automatic, and does not produce a visual display for effecting user choice among a variety of code objects.

Neither of these prior art documents provides a solution to the problem outlined above.

### SUMMARY OF THE PRESENT INVENTION

The present invention meets the above-identified needs and others. Specifically, it is an object of the present invention to provide a method and system by which subscribers to a cable or other computer network can, on impulse and on demand, select, purchase, download and implement additional or upgraded programming for their set-top terminals. The method and system of the present invention further aim to allow the system operator to support this upgrade service for subscribers at minimal cost, i.e. with electronic delivery that does not require staff to take and fill subscriber requests for additional or upgraded programming.

According to the present invention, a method of advising a subscriber to a cable television system of code objects that may be received over the cable television network to upgrade or enhance features provided by a subscriber's set-top terminal comprises transmitting a message to said set-top terminal that provides a directory of code objects, a code object of said code objects being software or firmware. The method comprises:
transmitting a message to said set-top terminal that provides a directory of code objects, a code object of said code objects being software or firmware;
characterised by:
transmitting said directory of said code objects from said set-top terminal to a display device; and
displaying said directory of said code objects on said display device;
and further characterised in that said message identifies the location of each listed code object and the location of a corresponding entitlement control data structure (ECDS) for each code object.

Additionally, the present invention also encompasses the system necessary for performing the foregoing method. Specifically, the present invention provides a system for advising a subscriber to a cable television system of code objects that may be received over the cable television network to upgrade or enhance features provided by that subscriber's set-top terminal, the system comprising a headend facility from which a cable television signal and code objects are transmitted to a population of set-top terminals over said cable television system, a code object of said code objects being software or firmware. The system is characterised in that:
said headend facility includes a transmitter adapted to transmit to said set-top terminals a message which provides a directory of said code objects; and
at least some of said set-top terminals are each connected to a respective display device to display said directory of said code objects from said message received by the set-top terminal;
and further characterised in that the transmitter is adapted to transmit said message in a format which identifies the location of each listed code object and the location of a corresponding entitlement control data structure (ECDS) for each code object.

Preferred features and advantages of the invention will be apparent from the claims and from the following description.

### BRIEF DESCRIPTION OF THE DRAWINGS

Embodiments of the invention will be described, by way of example, with reference to the drawings, in which:
Fig. 1 is a block diagram of a cable network including a headend and a population of set-top terminals with which the present invention is practised.
Fig. 2 is a flowchart of a first embodiment of the method of providing code objects to subscribers on-demand according to the present invention.
Fig. 3 is a flowchart of a second embodiment of the method of providing code objects to subscribers on-demand according to the present invention.
Fig. 4 is a flowchart of a third embodiment of the method of providing code objects to subscribers on-demand according to the present invention.

### DETAILED DESCRIPTION OF THE INVENTION:

According to the present invention, a directory of services ("DoS") message is transmitted by the service provider over the cable network (103) to the individual set-top terminals (102). Preferably, the DoS message is transmitted from the headend (101) using the headend transmitter (116). The DoS message provides the information necessary to allow any set-top terminal (102) to locate and download a software or firmware code object from within the signal provided by the headend (101) over the cable network (103).

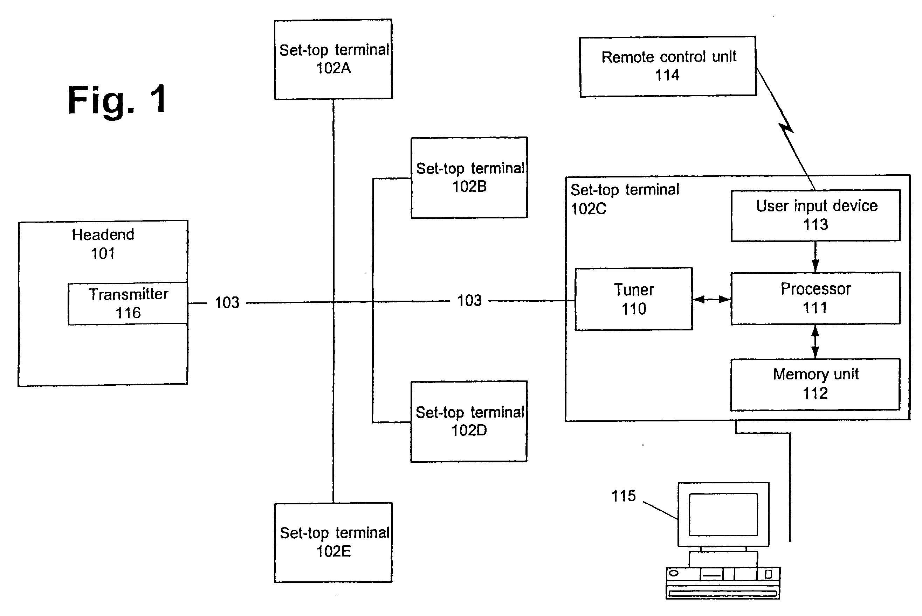

As shown in Fig. 1, the headend facility (101) is connected via a cable network (103) to a population of set-top terminals (102). Each set-top terminal (102) is possessed and used by a particular subscriber to the cable service. Each set-top terminal (102) includes a processor (111) with a memory unit (112). The memory unit (112) contains programming and data accessed by the processor (111) to provide those services available over the cable service which that subscriber wishes to receive.

In the event that a subscriber, perhaps a new subscriber, wishes to add to the services received, he or she typically needs to acquire additional or upgraded programming in the form of software or firmware required to enable his or her set-top terminal (102) to provide the newly desired service or services. This new programming is stored in the memory unit (112) for execution by the processor (111). As used herein, a programming code object, or code object, refers to an individual piece of software or firmware that is acquired, stored or executed by the set-top terminal (102). More generally, the term "data object" refers to any data structure transmitted by the headend (101) to the set-top terminals (102). Consequently, a data object may be a message, instruction, data structure or code object.

In addition to providing services, such as a cable television signal, the headend (101) can also transmit instructions and programming code objects to the set-top terminals (102) directly over the cable network (103) using the transmitter (116). Thus, the subscriber wishing to upgrade or add to the programming in his or her set-top terminal (102) so as to take advantage of additional service offered over the cable system can download the necessary programming with his or her set-top terminal (102) from off of the cable network (103). This avoids the need for a technician to visit the subscriber to add programming the memory unit (112).

Messages and programming may be routinely broadcast by the headend (101) over the cable network (103). These messages and programming are typically "packetized", meaning that the data of the message or the software of firmware is divided into discrete "packets" of data. Each packet includes a header that identifies the message or object of which it is a part and identifies the position of that particular packet within the message or object to which it belongs. Consequently, the processor (111) of the set-top terminal (102) collects the packets of the message or object being acquired and reassembles the packetized data into the needed message or object as sent by the headend (101).

More specifically, the packets of each data object being transmitted bear a unique packet identifier (PID) number, or other identifier, within the packet transport stream, or PID stream. Each PID number (or other identifier) identifies the packets that bear that number/identifier as belonging to a particular data object being transmitted.

With transmitted data objects being packetized, numerous data objects can be broadcast simultaneously by interspersing the packets of the various objects being transmitted. These streams of data packets can be sent on both in-band and out-of - band (OOB) channels of the cable television signal sent from the headend (101) to the set-top terminals (102). The tuner (110) of each set-top terminal (102) is controlled by the processor (111) to tune channels, both in-and out-of-band, as necessary so that the processor (111) can receive data from the headend (101) via the one or more data transport streams output by the headend (101).

Like all other data objects, the DoS message of the present invention is transmitted to the set-top terminals (102) by the headend (101) over the cable network (103). Preferably, the DoS message is delivered as a sub-message within the OOB Network message identified by the OOB network PID. The DoS message may or may not be sent in segments depending primarily on its size. In any event, when the DoS message is received by the set-top terminals (102), it will provide the following information.

The DoS message is a directory of the code objects that are being transmitted over the cable network (103) that are available for download by the set-top terminals (102). As discussed above, these code objects, if purchased, received and executed, typically increase or enhance the services provided by the set-top terminals (102). In the past, subscribers have not been able to, on impulse, identify and acquire additional or upgraded programming available to enhance or increase the services provided to them over the cable network (103). With the present invention, the DoS message provides a means of advising subscribers what additional or upgraded programming is available and a means of instructing the set-top terminals (102) as to how and where, in the incoming signal, to acquire those objects at the direction of the subscriber.

The set-top terminals (102) take the information from the DoS message and preferably display it for subscribers. Consequently, either on a television or computer monitor (115) attached to the terminal (102) or, perhaps, on a display of the terminal itself, the terminal (102) can display a directory, either a listing or categorized menu, of the code objects available for download to increase or enhance the services provided. The DoS message may also include, and the terminal (102) display as part of the directory, a description of the function of functions of each available object and the fee that will be charged to the subscriber's account if the object is purchased and downloaded. The subscriber can then respond to the offerings displayed by the terminal (102) using, for example, a remote control unit (114) or other user input device (113), for example a keypad on the set-top terminal itself, and instruct the set-top terminal (102) to acquire the indicated code object or objects. As will be understood by those skilled in the art, the user input device (113) of the present invention may be any user input device with which a user can indicate a selection from the directory of programming displayed in response to the DoS message. The user input device (113) may include, but is not limited to, a keypad, buttons, switches, a knob, a dial, a trackball, a trackpad, a touch-sensitive display, etc. The user input device (113) as shown in Fig. 1, may also include a receiver for receiving a signal from a remote control unit (114).

The DoS message also identifies for the set-top terminal (102) the location of each listed code object and its corresponding entitlement control data structure (ECDS). To specify the location of a code object or its ECDS, the DoS message lists the channel or frequency of the transport stream, in-band or out-of-band, at which the packets for that code object or its corresponding ECDS are being transmitted, typically carouseled with the packets of other data objects. The set-top terminal (102) then tunes to that transport steam using the tuner (110). The DoS message may also specify directly, or reference through a table, the PID of the packets carrying the listed code object or ECDS. The processor (111) of the set-top terminal (102) can then acquire all the packets with that PID number and reassemble the collected data into the programming object to be acquired or its ECDS.

Alternatively, the cable network (103) may be organized as computer network using URLs or universal resource locators to specify the address of downloadable code objects. Consequently, the DoS message may specify the location of a listed code object and its corresponding ECDS by URL for download by the set-top terminal (102).

The ECDS is transmitted or stored separately from its corresponding code object and is used to authorize and authenticate the code object. Using the data of the ECDS, the processor (111) of the set-top terminal (102) can verify that it has downloaded the appropriate code object and that the code object has been received correctly without inadvertent or malicious alteration. It is obviously important for the set-top terminal (102) to be able to authenticate and authorize the received code object before that object is executed by the set-top terminal (102). This allows the system operator to prevent subscribers reprogramming their set-top terminals to enable the receipt of unauthorized services for which the subscriber has not subscribed and paid. Authorization and authentication using an ECDS also helps avoid the introduction of, for example, a virus to the cable system. The ECDS may also specify a valid time period or lifetime for the corresponding code object. The ECDS may also be used to specify the cost of downloading the object to the subscriber.

In a preferred embodiment, the DoS message of the present invention should include the following information: (1) a message version number that is incremented each time the directory of services is altered and so indicates if the directory message has been updated; (2) a table compatibility identifier that specifies the executable environment of available code objects, e.g., uSoft™, WinCE™, Sun JVM™, @home Navshell™ or Prevue™ EPG (electronic program guide); and (3) the number of objects listed.

For each listed object, the DoS message will preferably include: (1) a unique object identifier that may be assigned by the service provider or system operator; (2) an object class description indicating the use class of the object (e.g., platform, operating system, application, etc.) offered for download; (3) the name of the object, preferably in ASCII text; (4) the version of the object; (5) the storage classification of the object, e.g., volatile memory, non-volatile memory, doesn't matter, etc.; (6) the object size, preferably the ROMMABLE size (in bytes) of the encapsulated object not including the size of the static variable required for operation of the code object; (7) an indicator of whether the code may or may not be relocated to Flash memory as part of later de-fragmentation during the lifetime of the set-top terminal; (8) a description of the object's function; (9) the object's location, e.g., transport stream channel and PID or URL; (10) the length of the object location field; (11) the location of the object's corresponding ECDS, e.g., transport stream channel and PID or URL; and (12) the length of the ECDS location field.

It will also be recognized by those skilled in the art that, within the network (103), each set-top terminal (102) may have a specific address and one or more multi-cast addresses such that the headend (101) can direct messages to specific set-top terminals or to define groups of terminals sharing a particular multi-cast address. Within the scope of the present invention, the DoS message may be broadcast to all set-top terminals (102) within the network, multi-cast to a particular group of terminals (e.g. 102A and 102B) or single-cast to a particular terminal (e.g., 102A). For example, the service provider may charge additional fees for making the DoS message available to subscribers. Thus, only those subscribers paying the additional fee would receive the DoS in a multi-cast. Additionally, different DoS messages offering different classes of code objects may be made available to specific segments of the set-top terminal population (102).

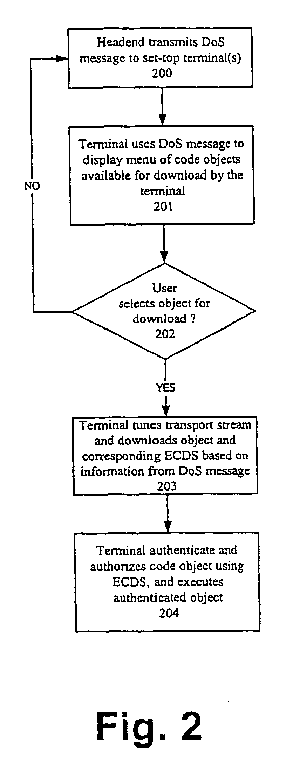

Fig. 2 is a flowchart summarizing the basic method of the present invention. As shown in Fig. 2, the headend transmits the DoS message to the set-top terminals (200). The set-top terminals query the subscribers by displaying a listing or categorized menu of the objects available for download (201). The subscribers can then indicate a desire to acquire an object or objects from the menu (202). The terminal then uses the data from the DoS message to locate and acquire the indicated object and its corresponding ECDS (203), i.e. by tuning to the specified channel and data transport stream and acquiring the data packets bearing a specified identifier. The processor (111) then authenticates the object using the ECDS and implements the object, provided that it passes the authentication check (204) .

Consequently, under the principles of the present invention, individual subscribers have control over the purchase and acquisition of enhanced or upgraded programming for their set-top terminals and can, on impulse, acquire new programming over the cable network without contacting or being visited by a representative of the service provider.

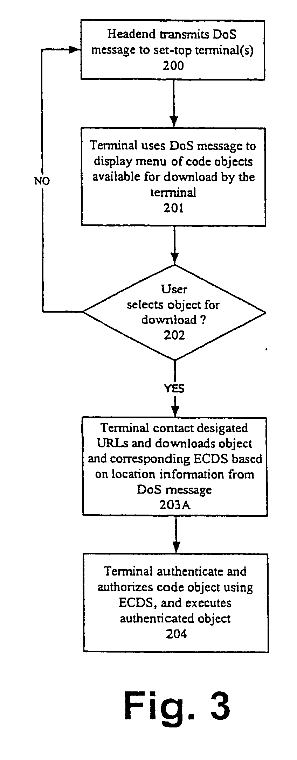

Fig. 3 provides a flowchart for a second embodiment of the method of the present invention. The method illustrated in Fig. 3 is substantially similar to that of Fig. 2 in which the headend transmits a DoS message (200) which is received by the set-top terminal and used to display a director of programming available for download (201). However, as shown in Fig. 3 and as noted above, the DoS message may specify a URL at which a listed code object or its ECDS may be acquired by the set-top terminal. Consequently, upon the user selection an object for download (202), the set-top terminal may connect to the site designated by the specified URL and, form that site, download either a code object or its corresponding ECDS. (203A).

As in Fig. 2 after the code object and ECDS have been acquired, the terminal authenticates and authorizes the code object using the ECDS. The terminal then executes the code object. (204).

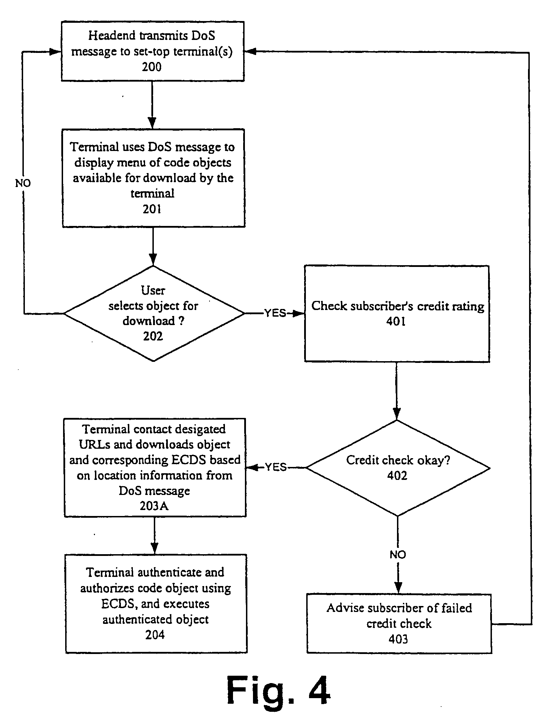

Fig. 4 provides a flowchart of a third embodiment of the present invention. As shown in Fig. 4, the headend transmits a DoS message (200) which is received by the set-top terminal and used to display a director of programming available for download (201). The user may or may not select a listed object for purchase (202). If the user does select an object for purchase and immediate download, the set-top terminal may first check the subscriber's credit before initiating the instructed download (401) .

The credit check of the present invention could be accomplished by signaling the headend (101) for an indication of the subscriber's credit rating and whether the subscriber should be allowed to download the requested programming at that time. Alternatively, the processor (111) may check an internally stored indication of the subscriber's credit limitations. This subscriber credit limitation may be recorded in the memory unit (112) with appropriate security measures, and updated periodically by the headend (101) as warranted.

In either case, if the subscriber's credit rating is satisfactory, the set-top terminal (102) proceeds to download the specified programming and its ECDS by either tuning the designated data transport steam or connecting to the designated URL (204). If the subscriber fails the credit check (402), a message advising the subscriber of the credit problem can be displayed on the television or monitor (115) connected to the set-top terminal or on a display on the terminal itself (403).

## Claims

1. A method of advising a subscriber to a cable television system of code objects that may be received over the cable television network (103) to upgrade or enhance features provided by a subscriber's set-top terminal (102), the method comprising:
transmitting a message to said set-top terminal (102) that provides a directory of code objects, a code object of said code objects being software or firmware;
**characterised by**:
transmitting said directory of said code objects from said set-top terminal (102) to a display device (115); and
displaying said directory of said code objects on said display device (115);
and further **characterised in that** said message identifies the location of each listed code object and the location of a corresponding entitlement control data structure (ECDS) for each code object.

2. The method of claim 1, wherein said code object is available for purchase and download over said cable television system (103).

3. The method of claim 1 or claim 2, further comprising receiving a selection of said code object from said directory through a user input device (113) of said set-top terminal (102).

4. The method of claim 3, further comprising downloading said selected code object in accordance with said selection received through said user input device (113) and based on the location information of said selected code object.

5. The method of claim 4, in which the set-top terminal (102) retrieves the corresponding ECDS and uses data therein to verify that the appropriate code object has been downloaded.

6. The method of claim 5, in which the set-top terminal (102) further uses the data in the ECDS to verify that the code object has been correctly received.

7. The method of any of claims 4 to 6, wherein said downloading further comprises tuning a data transport stream specified in said message in connection with said selected code object.

8. The method of any of claims 4 to 6, wherein said downloading further comprises connecting to a site identified by a URL specified in said message in connection with said selected code object.

9. The method of any of claims 3 to 8, further comprising checking a credit rating of said subscriber in response to said selection of said code object and downloading said selected code object only if said credit check of said subscriber is favorable.

10. The method of any preceding claim, wherein said transmitting said message further comprises specifically addressing said message to one or more set-top terminals (102) in said cable television system.

11. The method of claim 10, wherein said specifically addressing said message further comprises specifically addressing said message to set-top terminals (102) of subscribers who have paid to receive said message.

12. A system for advising a subscriber to a cable television system of code objects that may be received over the cable television network (103) to upgrade or enhance features provided by that subscriber's set-top terminal (102), the system comprising:
a headend facility (101) from which a cable television signal and code objects are transmitted to a population of set-top terminals (102) over said cable television system, a code object of said code objects being software or firmware;
**characterised in that**
said headend facility (101) includes a transmitter (116) adapted to transmit to said set-top terminals (102) a message which provides a directory of said code objects; and
at least some of said set-top terminals (102)are each connected to a respective display device (115) to display said directory of said code objects from said message received by the set-top terminal (102);
and further **characterised in that** the transmitter (116) is adapted to transmit said message in a format which identifies the location of each listed code object and the location of a corresponding entitlement control data structure (ECDS) for each code object.

13. The system of claim 12, wherein said code object is available for purchase and download over said cable television system (103).

14. The system of claim 12 or claim 13, further comprising a user input device (113) for receiving a selection of code objects from said displayed directory.

15. The system of claim 14, further comprising means, within said set-top terminal (102), for downloading selected code objects in accordance with said selection received through said user input device (113) and based on the location information of said selected code objects.

16. The system of claim 15, further comprising means, within the set-top terminal (102), for retrieving the corresponding ECDS and using data therein to verify that the appropriate code object has been downloaded.

17. The system of claim 16 in which said means further uses the data in the ECDS to verify that the code object has been correctly received.

18. The system of any of claims 15 to 17, wherein said means for downloading further comprises a tuner for tuning a data transport stream specified in said message in connection with said selected code objects.

19. The system of any of claims 15 to 17, wherein said means for downloading further comprises means for connecting to a site identified by a URL specified in said message in connection with said selected code objects at which said selected code objects is stored.

20. The system of any of claims 15 to 19, further comprising means for checking a credit rating of said subscriber in response to said selection of code objects, wherein said selected code objects is downloaded only if said credit check of said subscriber is favorable.

21. The system of any of claims 15 to 20, wherein said transmitter specifically addresses said message to one or more set-top terminals (102) in said cable television system.

22. The system of claim 21, wherein said transmitter specifically addresses said message to set-top terminals (102) of subscribers who have paid to receive said message.
